# EUROPEAN PATENT APPLICATION

(11) **EP 2 592 864 A1**
(43) Date of publication of application: **15.05.2013**
(21) Application number: 11360049.8
(22) Date of filing: 10.11.2011
(51) Int. Cl.: H04W 28/16, H04W 76/02

(54) **Service link establishment**

(71) Applicant: Alcatel Lucent, 75007 Paris (FR)
(72) Inventor: Puddle, Nicola, Swindon, Wiltshire SN4 0ND (GB); Brend, Graham, Bathford, Bath BA1 7UE (GB); Wong, Shin Horng, Chippenham, Wiltshire SN14 0SP (GB)
(74) Representative: Script IP Limited

(57) **Abstract**

A method of establishing a plurality of service links between user equipment and a network access node in a wireless telecommunications network, and user equipment and a computer program product operable to perform that method. The method comprises: determining that there is data traffic to be sent between user equipment and the network access node; establishing a first service link for communication of the data traffic; determining that there is further data traffic requiring establishment of a second service link, to be sent between the user equipment and the network access node;
determining a pre-set radio condition parameter indicative of radio condition required for successful communication of the further data traffic on the second service link between said user equipment and the network access node; assessing radio condition experienced at the user equipment and, if said radio condition parameter is being met,
establishing a second service link for communication of the further data traffic. Such a method allows user equipment to determine whether a second service link is likely to be successfully established, thereby offering an opportunity to minimise unnecessary network signalling and the likelihood that a second service link will pull down the first service link.

## Description

### FIELD OF THE INVENTION

The present invention relates to a method of establishing a plurality of service links in a wireless telecommunication network, user equipment operable to carry out that method and a computer program product operable to carry out that method.

### BACKGROUND

Wireless telecommunications systems are known. In a cellular system, radio coverage is provided to user equipment, for example, mobile telephones, in areas known as cells. A base station is located in each cell to provided radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on data channels of radio carriers known as uplink carriers.

The widespread popularity of smartphones has caused a significant change to data traffic profiles carried in known telecommunications networks. The data traffic profile of user equipment is becoming more heavily loaded in relation to data transmissions. The increased number of data calls rather than voice calls has led to a change in overall user equipment operation. Traditional transmission mode methods, designed primarily for a network intended for voice call transmissions, may not aid overall efficient network operation and may be unsuitable for such a change to a typical data traffic profile.

Accordingly, it is desired to provide an improved technique for establishing service links in a wireless telecommunications network.

### SUMMARY

A first aspect provides a method of establishing a plurality of service links between user equipment and a network access node in a wireless telecommunications network, comprising: determining that there is data traffic to be sent between the user equipment and the network access node; establishing a first service link for communication of the data traffic; determining that there is further data traffic requiring establishment of a second service link, to be sent between the user equipment and the network access node; determining a pre-set radio condition parameter indicative of radio condition required for successful communication of the further data traffic on the second service link between the user equipment and the network access node; assessing radio condition experienced at the user equipment and, if said radio condition parameter is being met, establishing a second service link for communication of the further data traffic.

Wireless networks typically allow a mobile user to establish calls or service links which support differing types of application or service. For example, UMTS networks provide support for both circuit switched (CS) and packet switched (PS) calls. CS radio access bearers (RABs) are typically established to support voice applications or voice calls and PS radio access bearers (RABs) are typically established to support applications requiring the transfer of data; for example, Web browsing, uploading photos and similar.

Typical UMTS user equipment (UE) have the ability to handle both CS RABs and PS RABs simultaneously. As a result, user equipment is operable to provide an end user with a wide range of feature-rich applications and services. A UMTS network also supports the ability to establish both circuit switched and packet switched radio access bearer connections with user equipment operating in a particular cell.

It has been found that there are occasions when a network accepts a request to accept a packet switched RAB in addition to an existing circuit switched RAB. In some cases, this configuration may lead to failure of both packet switched and circuit switched RABs and, thus, an overall loss of communication with user equipment and loss or dropping of the packet switched and circuit switched call. Such dropped call scenarios typically occur when user equipment, attached to a UMTS network cell, is in an area experiencing poor radio frequency transmission conditions. Supporting an additional packet switched RAB as a service link with the user equipment typically requires a higher signal quality (for example, signal to noise and interference ratio), and therefore may require more resources (for example, transmit power). Since user equipment operating in poor RF conditions may be unable to support higher signal quality demands demanded by a packet switched RAB service link, due to, for example, a lack of available transmission power in the uplink and/or poor downlink reception, all connections to the user equipment are likely to be affected. Such a situation typically results in poor circuit switched and packet switched services and in the worst case may result in call drop. It will be appreciated that demanding higher transmission power from user equipment, in order to mitigate a lack of available uplink transmission power, may not be beneficial to network operation as a whole, since it is likely to introduce interference to the service offered to other user equipment within a cell.

It has also been noted that adding a packet switched RAB service link to a connection to a circuit switched RAB service link at user equipment may increase a number of errors detected on the radio interface, due to poor RF conditions. As a result, the network, for example a base station or RNC, may be operable to determine that the error rate is sufficiently high to warrant release of the user equipment after which the user equipment must re-attach itself to a network, having lost all connection. That reconnection may occur via another cell which offers a better RF condition to that user equipment.

It is common place for circuit switched radio access bearers to be treated with a higher priority than a packet switched radio access bearer. As a result, a telecommunications network may be operable to implement various solutions to try and protect a circuit switched service connection and to avoid scenarios in which it adds a packet switched connection to user equipment operating having an existing circuit switched connection, particularly in instances when it may result in a circuit switched link being dropped.

Accordingly, a network may be operable to reject a request to add a packet switched connection to an existing circuit switched connection or to ignore a paging request from a packet switched core network, thereby preventing the user equipment receiving a trigger to request establishment of a packet switched connection. Alternatively, the network may be operable to drop an existing packet switched connection if the user equipment requests establishment of a circuit switched connection, thereby providing service to the circuit switched connection if at all possible.

Such examples and further examples can result in significant additional work within the network, simply to prevent user equipment establishing a packet switched connection. That additional signalling within a network is likely to be further exacerbated by user equipment typically being operable to continually repeat any request to establish a connection, be it circuit or packet switched, even if the network has rejected it.

Aspects described herein implement a method which aims to reduce impact on the network when establishing a plurality of service links with user equipment and at the same time provides the user equipment with an ability to request the establishment of a packet switched or other similar service link if the impact of such an action is unlikely to have a detrimental effect.

The first aspect recognises that by introducing the ability of user equipment to implement a specific "RF threshold" or "thresholds" when deciding whether to request establishment of a second service link (for example, PS RAB, CS RAB or equivalent service link in LTE/4G system architecture) may reduce unnecessary network signalling and reduce the likelihood that a second service link with be unsuccessful.

In one embodiment, the second service link typically requires a greater transmission power to successfully transmit the further data traffic than the first service link typically requires to successfully transmit the data traffic. Accordingly, a first service link may remain operational if no attempt to establish a second service link, having different operational requirements is made.

It will be appreciated that in some embodiments, the second service link may not require more transmission power than the first, but rather that the combined requirements of maintaining the first and second link may cause the whole connection to drop, even if the second link requires less resource than the first. The parameter implemented at user equipment may be set to account for the combined resource requirement of the first and second service links.

In one embodiment, the data traffic comprises data of a first data traffic type and the further data traffic comprises data of a second data traffic type. Accordingly, different data traffic types may be carried on each service link. For example, the first service link may carry a voice call, whilst a second service link carries user data traffic. Alternatively, the first service link may carry Voice over IP data traffic, whilst the second carries streamed data or web browsing data. It will be appreciated that the service requirements of each type of data traffic may differ. Accordingly, in one embodiment, the pre-set radio condition parameter is determined in accordance with transmission characteristics of the second data traffic type.

In one embodiment, the transmission characteristics of the second data traffic type comprise an indication of quality of service associated with the second data traffic type. Accordingly, for data traffic having a high priority, or a demanding Quality of Service (QoS) profile, more stringent parameters or thresholds, indicative of a need for a stronger radio link, or user equipment experiencing a better RF communication environment, may be implemented. Of course, it will be appreciated that in cases where the priority of the first and second service links are substantially identical, or the second is of lower priority than the first, rejection of the second service link if the parameter is not met can be beneficial, since disconnection of a pre-established service link may be disruptive to the network.

In one embodiment, the pre-set radio condition parameter comprises an indication of a threshold Received Signal Code Power value. In one embodiment, the pre-set radio condition parameter comprises an indication of a threshold Energy per Chip/Noise value. It will be appreciated that any direct or indirect measurement made by the user equipment indicative of radio condition being experienced may be successfully chosen as a pre-set radio condition parameter.

In one embodiment, the first service link comprises a circuit switched service link. In one embodiment, the second service link comprises a packet switched service link. Such service links make the first aspect particularly suitable for use in UMTS network architecture.

In one embodiment, assessing radio condition experienced at the user equipment comprises averaging a series of radio condition measurements. Accordingly, fluctuating RF condition measurements may be filtered to give a more reasonable picture of RF condition being experienced by user equipment.

In one embodiment, the method further comprises: assessing radio condition experienced at the user equipment for the duration of a predetermined stability time period, and if the radio condition parameter is being met for the duration of the predetermined stability time period, establishing the second service link for communication of the further data traffic. Accordingly, the stability of radio conditions being experienced at user equipment may be taken into account before establishment of a second service link.

In one embodiment, the method further comprises: assessing radio condition experienced at the user equipment and, if the radio condition parameter is not being met, continuing to assess radio condition for a predetermined back-off period before reassessing the radio condition experienced at the user equipment. Accordingly, user equipment may be operable to minimise network signalling before repeating a request for a second service link. Furthermore, assessment of radio condition at user equipment may be implemented periodically, such that internal user equipment signalling and measurement is minimised.

A second aspect provides a computer program product operable, when executed on a computer, to perform the method of the first aspect.

A third aspect provides user equipment operable to establish a plurality of service links with a network access node in a wireless telecommunications network, the user equipment comprising: data traffic logic operable to determine that there is data traffic to be sent between the user equipment and the network access node;
first service link establishment logic operable to establish a first service link for communication of the data traffic; link establishment logic operable to determine that there is further data traffic requiring establishment of a second service link, to be sent between the user equipment and the network access node; parameter logic operable to determine a pre-set radio condition parameter indicative of radio condition required for successful communication of the further data traffic on the second service link between the user equipment and the network access node; assessment logic operable to assess radio condition experienced at the user equipment and, if the radio condition parameter is being met, establishing a second service link for communication of the further data traffic.

In one embodiment, the second service link typically requires a greater transmission power to successfully transmit the further data traffic than the first service link typically requires to successfully transmit the data traffic.

In one embodiment, the data traffic comprises data of a first data traffic type and the further data traffic comprises data of a second data traffic type.

In one embodiment, the pre-set radio condition parameter is determined in accordance with transmission characteristics of the second data traffic type.

In one embodiment, the transmission characteristics of the second data traffic type comprise an indication of quality of service associated with the second data traffic type.

In one embodiment, the pre-set radio condition parameter comprises an indication of a threshold Received Signal Code Power value.

In one embodiment, the pre-set radio condition parameter comprises an indication of a threshold Energy per Chip/Noise value.

In one embodiment, the first service link comprises a circuit switched service link.

In one embodiment, the second service link comprises a packet switched service link.

In one embodiment, the assessment logic is operable to assess radio condition experienced at the user equipment by averaging a series of radio condition measurements.

In one embodiment, the assessment logic is operable to assess radio condition experienced at the user equipment for the duration of a predetermined stability time period, and if the radio condition parameter is being met for the duration of the predetermined stability time period, said establishment logic is operable to establish the second service link for communication of the further data traffic.

In one embodiment, the assessment logic is operable to assess radio condition experienced at the user equipment and, if the radio condition parameter is not being met, continue to assess radio condition for a predetermined back-off period before reassessing the radio condition experienced at the user equipment.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments will now be described further with reference to the accompanying drawings in which:
Figure 1 illustrates the main components of a telecommunications network according to one embodiment;
Figure 2 is a signalling diagram illustrating schematically a method according to one embodiment; and
Figure 3 is a schematic representation of a method according to a further embodiment.

### DESCRIPTION OF THE EMBODIMENTS

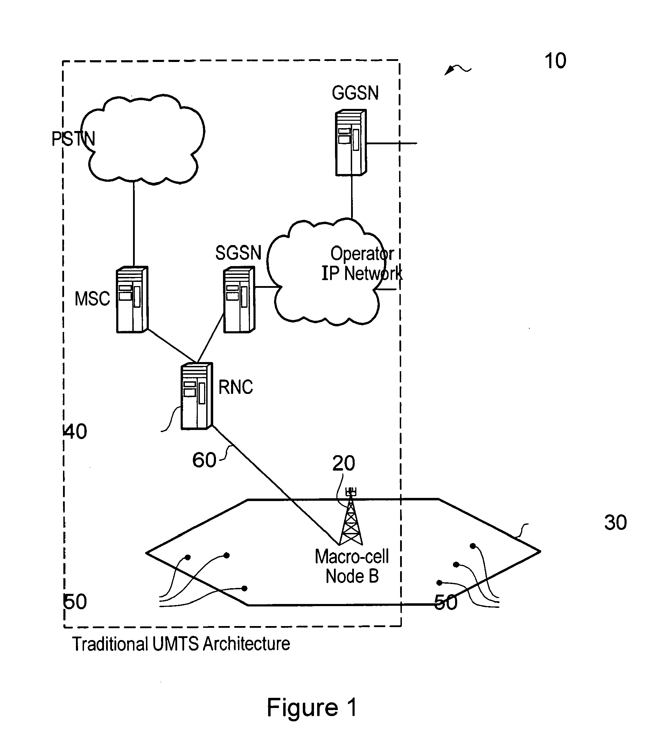

Figure 1 illustrates schematically the main components of a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically, a different antenna within a base station supports each associated sector. Each base station 20 has multiple antennas. It will be appreciated that Figure 1 illustrates a small sub-set of a total number of user equipment and base stations that may be present in a typical communications system.

The wireless communications system is managed by a radio network controller (RNC) 40. The RNC 40 controls operation of the wireless telecommunications system by communicating with a plurality of base stations over a backhaul communications link 60. The RNC also communicates with user equipment 50 via each base station and, thus, effectively manages a region of the entire wireless communications network 10. User equipment communicates with base stations 20 by transmitting data and information on channels known as uplink or reverse channels, and a base station 20 communicates with user equipment 50 by transmitting data and information on radio channels known as downlink or forward channels.

Wireless networks typically allow a mobile user to establish calls or service links which support differing types of application or service. For example, UMTS networks provide support for both circuit switched (CS) and packet switched (PS) calls. CS radio access bearers (RABs) are typically established to support voice applications or voice calls and PS radio access bearers (RABs) are typically established to support applications requiring the transfer of data; for example, Web browsing, uploading photos and similar.

Typical UMTS user equipment (UE) have the ability to handle both CS RABs and PS RABs simultaneously. As a result, user equipment is operable to provide an end user with a wide range of feature-rich applications and services. A UMTS network also supports the ability to establish both circuit switched and packet switched radio access bearer connections with user equipment operating in a particular cell.

It has been found that there are occasions when a network accepts a request to accept a packet switched RAB in addition to an existing circuit switched RAB. In some cases, this configuration may lead to failure of both packet switched and circuit switched RAB and, thus, an overall loss of communication with user equipment and loss or dropping of the packet switched and circuit switched call. Such dropped call scenarios typically occur when user equipment, attached to a UMTS network cell, is in an area experiencing poor radio frequency transmission conditions. Supporting an additional packet switched RAB as a service link with the user equipment typically requires a higher signal quality (for example, signal to noise and interference ratio), and therefore may require more resources (for example, transmit power). Since user equipment operating in poor RF conditions may be unable to support higher signal quality demands demanded by a packet switched RAB service link, due to, for example, a lack of available transmission power in the uplink and/or poor downlink reception, all connections to the user equipment are likely to be affected. Such a situation typically results in poor circuit switched and packet switched services and in the worst case may result in call drop. It will be appreciated that demanding higher transmission power from user equipment may not be beneficial to network operation as a whole, since it is likely to introduce interference to the service offered to other user equipment within a cell.

It has also been noted that adding a packet switched RAB service link to a connection to a circuit switched RAB service link at user equipment may increase a number of errors detected on the radio interface, due to poor RF conditions. As a result, the network, for example a base station or RNC, may be operable to determine that the error rate is sufficiently high to warrant release of the user equipment after which the user equipment must re-attach itself to a network, having lost all connection. That reconnection may occur via another cell which offers a better RF condition to that user equipment.

It is common place for circuit switched radio access bearers to be treated with a higher priority than a packet switched radio access bearer. As a result, a telecommunications network may be operable to implement various solutions to try and protect a circuit switched service connection and to avoid scenarios in which it adds a packet switched connection to user equipment operating having an existing circuit switched connection, particularly in instances when it may result in a circuit switched link being dropped.

Accordingly, a network may be operable to reject a request to add a packet switched connection to an existing circuit switched connection or to ignore a paging request from a packet switched core network, thereby preventing the user equipment receiving a trigger to request establishment of a packet switched connection. Alternatively, the network may be operable to drop an existing packet switched connection if the user equipment requests establishment of a circuit switched connection, thereby providing service to the circuit switched connection if at all possible.

Such examples and further examples can result in significant additional work within the network, simply to prevent user equipment establishing a packet switched connection. That additional signalling within a network is likely to be further exacerbated by user equipment typically being operable to continually repeat any request to establish a connection, be it circuit or packet switched, even if the network has rejected it.

Aspects described herein implement a method which aims to reduce impact on the network when establishing a plurality of service links with user equipment and at the same time provides the user equipment with an ability to request the establishment of a packet switched or other similar service link if the impact of such an action is unlikely to have a detrimental effect.

Aspects described herein introduce the ability for a network to broadcast a specific "RF threshold" or "threshold" which user equipment can utilise when deciding whether to request establishment of a packet switched radio access bearer in addition to an existing circuit switched radio access bearer. It will be appreciated that user equipment may be operable such that they have predetermined RF thresholds set within their control logic and it need not necessarily be dependent upon transmission of a threshold by a network. Furthermore, although the following embodiments are described in relation to a circuit switched and packet switched radio access bearer, aspects are equally applicable to scenarios in which one or more service links are established between user equipment and a network, those service links being independent but having different priorities and therefore potentially different power and operation criteria.

In the case where a network is operable to transmit a threshold, it will be appreciated that since a threshold or thresholds can be broadcast across a cell area supported by a base station those thresholds may be read and utilised by any user equipment operating within that cell.

Indicative thresholds or a threshold transmitted by a network or implemented at user equipment provide a value or values associated with certain RF parameters which have to be met or exceeded before user equipment may attempt establishment of a packet switched radio access bearer if it is already supporting an existing circuit switched radio access bearer service link. The RF parameters used are those that are measurable at the user equipment. If the RF parameters are above the indicated values broadcast by the network as thresholds, user equipment operable to perform aspects of the present invention initiate a request to establish a packet switched radio access bearer and thus have a high degree of confidence that the network is unlikely to reject such a request. If it is determined at the user equipment that RF parameters are not above the threshold set by the network, user equipment according to some embodiments may be operable to take repeated measurements and, in such embodiments, if the RF conditions improve it may then initiate a packet switched RAB establishment request.

Aspects aim to reduce the load on both network and user equipment compared to rejection of a request at the network side.

The network may be operable, according to some embodiments, to broadcast one threshold relating to a single RF parameter and, according to other embodiments, to transmit a combination of parameters. Alternatively, the network could broadcast different thresholds for specific RF parameters. Examples of such parameters include user equipment received signal quality and user equipment transmission power headroom.

Further embodiments allow the network to broadcast a timer value associated with such thresholds. That timer value may inform user equipment within a cell of a "wait period" or "back-off timer". That timer indicates to user equipment operating in a cell that it must wait for a period defined by the value of the wait timer before requesting establishment of a packet switched radio access bearer. In some embodiments the RF conditions experienced at the user equipment must be maintained above or meet the thresholds for the duration of the wait timer before a packet switched RAB may be requested. According to some embodiments, the timer value can be used to indicate a period that the RF conditions have to remain stable; that is to say, above the threshold, before the user equipment can initiate a packet switched RAB establishment request. According to some embodiments, that wait timer indicates to user equipment that it must wait for a period defined by the value of that timer before requesting establishment of a packet switched RAB after an initial field request.

It will be appreciated that the impact of establishing and supporting a packet switched RAB to an end user within a network can vary, based on particular quality of service (QOS) associated with such a RAB. For example, certain types of service offered to user equipment and having a corresponding particular quality of service requirement may demand less resource from the network than others. As a result, such service links may typically be more resilient to errors which may occur because of poor RF conditions during the transmission of data on such RABs. Embodiments described herein may allow a network to broadcast different thresholds associated with each type of packet switched RAB quality of service. That is to say, a different threshold for different types of data traffic supported on different service links.

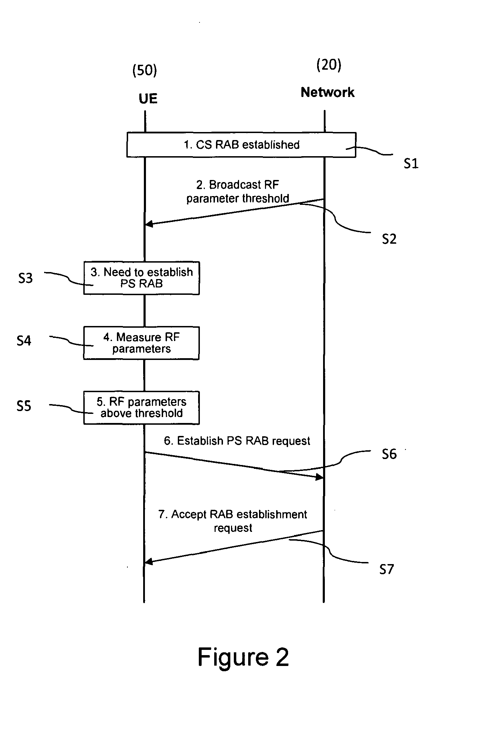

Figure 2 is a signalling diagram indicating schematically method steps occurring between user equipment operable to perform a method according to one embodiment and a network; for example, a base station or RNC. At step S1 the user equipment has already established a circuit switched radio access bearer connection with network 20. Either prior to step 1 or subsequent to step 1, network 20 is operable to broadcast an RF parameter threshold to user equipment 50 in relation to the establishment of a packet switched RAB connection. That broadcasting step is indicated schematically in Figure 2 as step S2. The threshold value broadcast by the network, for example, in a system information broadcast, may include a threshold value for a combination of received signal code power (RSCP) and/or energy per chip over noise AC/NO RF parameters.

At step S3, the user equipment 50 identifies a need to establish a packet switched RAB connection or service link with network 20. The user equipment 50 is operable to utilise the parameter threshold value sent by the network 20 at step S2 to determine whether it can trigger a request to add a packet switched radio access bearer service link to the existing circuit switched radio access bearer service link. Once the user equipment control logic identifies that the user equipment requires the establishment of a packet switched radio access bearer service link, the user equipment 50 is operable to repeatedly measure RF parameters being experienced at the user equipment. That measurement step, S4, occurs and if the user equipment determines that the parameters are above the broadcast threshold, as at step S5, it is operable to request establishment of a packet switched RAB service link. That establishment occurs at step S6. Since the parameters are such at the user equipment that a packet switched RAB service link is likely to be established successfully, the network is likely to operate at step S7 to accept the RAB establishment request issued by user equipment 50 and complete establishment of the new packet switched service link.

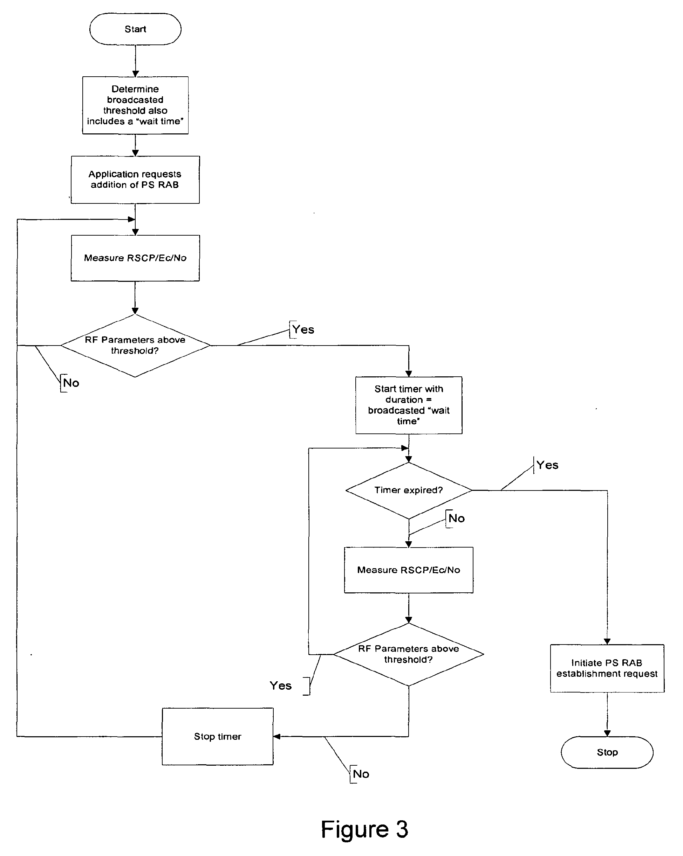

Figure 3 is a flowchart illustrating method steps performed at user equipment according to a further embodiment. In the example shown in Figure 3, a network operates to broadcast a threshold together with a wait timer value. That wait timer value provides user equipment with additional information which it can use to determine whether it is appropriate to request a packet switched RAB connection.

Signalling steps are similar to those illustrated schematically in the signalling diagram of Figure 2, other than that the user equipment is operable to start a timer using the broadcast timer value once it determines that measured RF parameters have risen above a broadcast threshold. The timer is stopped if the measured RF parameters fall below the threshold and that timer is restarted if they rise above the threshold. Such an embodiment provides a time hysteresis over which the user equipment RF condition is required to remain stable. It will be appreciated that the user equipment is likely to perform some filtering of RF parameters such that spikes over short time periods are accounted for. Once the timer expires and measured RF parameters have remained above the pre-set threshold for the predetermined time period, user equipment is operable to trigger and transmit a packet switched RAB service link establishment request. Aspects provide a solution to reduce the number of call drops which may occur when a packet switched RAB is added to a circuit switched RAB in the case where user equipment is experiencing poor RF conditions. Furthermore, aspects allow a reduction in unnecessary network signalling.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of establishing a plurality of service links between user equipment and a network access node in a wireless telecommunications network, comprising:
determining that there is data traffic to be sent between said user equipment and said network access node;
establishing a first service link for communication of said data traffic;
determining that there is further data traffic requiring establishment of a second service link, to be sent between said user equipment and said network access node;
determining a pre-set radio condition parameter indicative of radio condition required for successful communication of said further data traffic on said second service link between said user equipment and said network access node;
assessing radio condition experienced at said user equipment and, if said radio condition parameter is being met, establishing a second service link for communication of said further data traffic.

2. A method according to claim 1, wherein said second service link typically requires a greater transmission power to successfully transmit said further data traffic than said first service link typically requires to successfully transmit said data traffic.

3. A method according to claim 1 or claim 2, wherein said data traffic comprises data of a first data traffic type and said further data traffic comprises data of a second data traffic type.

4. A method according to any preceding claim, wherein said pre-set radio condition parameter is determined in accordance with transmission characteristics of said second data traffic type.

5. A method according to claim 4, wherein said transmission characteristics of said second data traffic type comprise an indication of quality of service associated with said second data traffic type.

6. A method according to any preceding claim, wherein said pre-set radio condition parameter comprises an indication of a threshold Received Signal Code Power value.

7. A method according to any preceding claim, wherein said pre-set radio condition parameter comprises an indication of a threshold Energy per Chip/Noise value.

8. A method according to any preceding claim, wherein said first service link comprises a circuit switched service link.

9. A method according to any preceding claim, wherein said second service link comprises a packet switched service link.

10. A method according to any preceding claim, wherein assessing radio condition experienced at said user equipment comprises averaging a series of radio condition measurements.

11. A method according to any preceding claim, wherein said method further comprises: assessing radio condition experienced at said user equipment for the duration of a predetermined stability time period, and if said radio condition parameter is being met for the duration of said predetermined stability time period, establishing said second service link for communication of said further data traffic.

12. A method according to any preceding claim, wherein said method further comprises: assessing radio condition experienced at said user equipment and, if said radio condition parameter is not being met, continuing to assess radio condition for a predetermined back-off period before reassessing said radio condition experienced at said user equipment.

13. A computer program product operable, when executed on a computer, to perform the method of any one of claims 1 to 12.

14. User equipment operable to establish a plurality of service links with a network access node in a wireless telecommunications network, said user equipment comprising:
data traffic logic operable to determine that there is data traffic to be sent between said user equipment and said network access node;
first service link establishment logic operable to establish a first service link for communication of said data traffic;
link establishment logic operable to determine that there is further data traffic requiring establishment of a second service link, to be sent between said user equipment and
said network access node;
parameter logic operable to determine a pre-set radio condition parameter indicative of radio condition required for successful communication of said further data traffic on said second service link between said user equipment and said network access node;
assessment logic operable to assess radio condition experienced at said user equipment and, if said radio condition parameter is being met, establishing a second service link for communication of said further data traffic.

## Amended claims

### Amended claims in accordance with Rule 137(2) EPC.

**1.** A method of establishing a plurality of service links between user equipment (50) and a network access node (20) in a wireless telecommunications network (10), comprising:
determining that there is data traffic to be sent between said user equipment (50) and said network access node (20);
establishing a circuit switched first service link for communication of said data traffic;
determining that there is further data traffic requiring establishment of a packet switched second service link, to be sent between said user equipment and said network access node;
determining, from a threshold broadcast across a cell area supported by said network access node, (S1) a pre-set radio condition parameter indicative of radio condition required for successful communication of said further data traffic on said packet switched second service link between said user equipment (50) and said network access node (20);
assessing (S4) radio condition experienced at said user equipment (50) and, if said radio condition parameter is being met, establishing a packet switched second service link for communication of said further data traffic.

**2.** A method according to claim 1, wherein said second service link typically requires a greater transmission power to successfully transmit said further data traffic than said first service link typically requires to successfully transmit said data traffic.

**3.** A method according to claim 1 or claim 2, wherein said data traffic comprises data of a first data traffic type and said further data traffic comprises data of a second data traffic type.

**4.** A method according to any preceding claim, wherein said pre-set radio condition parameter is determined in accordance with transmission characteristics of said second data traffic type.

**5.** A method according to claim 4, wherein said transmission characteristics of said second data traffic type comprise an indication of quality of service associated with said second data traffic type.

**6.** A method according to any preceding claim, wherein said pre-set radio condition parameter comprises an indication of a threshold Received Signal Code Power value.

**7.** A method according to any preceding claim, wherein said pre-set radio condition parameter comprises an indication of a threshold Energy per Chip/Noise value.

**8.** A method according to any preceding claim, wherein assessing radio condition experienced at said user equipment (50) comprises averaging a series of radio condition measurements.

**9.** A method according to any preceding claim, wherein said method further comprises: assessing radio condition experienced at said user equipment (50) for the duration of a predetermined stability time period, and if said radio condition parameter is being met for the duration of said predetermined stability time period, establishing said second service link for communication of said further data traffic.

**10.** A method according to any preceding claim, wherein said method further comprises: assessing (S4) radio condition experienced at said user equipment (50) and, if said radio condition parameter is not being met, continuing to assess radio condition for a predetermined back-off period before reassessing said radio condition experienced at said user equipment.

**11.** A computer program product operable, when executed on a computer, to perform the method of any one of claims 1 to 10.

**12.** User equipment (50) operable to establish a plurality of service links with a network access node (20) in a wireless telecommunications network (10), said user equipment (50) comprising:
data traffic logic operable to determine that there is data traffic to be sent between said user equipment and said network access node (20);
first service link establishment logic operable to establish a circuit switched first service link for communication of said data traffic;
link establishment logic operable to determine that there is further data traffic requiring establishment of a packet switched second service link, to be sent between said user equipment (50) and said network access node (20);
parameter logic operable to determine from a threshold broadcast across a cell area supported by said network access node, a pre-set radio condition parameter indicative of radio condition required for successful communication of said further data traffic on said packet switched second service link between said user equipment (50) and said network access node (20);
assessment logic operable to assess radio condition experienced at said user equipment (50) and, if said radio condition parameter is being met, establishing a packet switched second service link for communication of said further data traffic.
